# EUROPEAN PATENT APPLICATION

(11) **EP 4 769 604 A1**
(43) Date of publication of application: **01.07.2026**
(21) Application number: 25861041.9
(22) Date of filing: 26.06.2025
(51) Int. Cl.: H01M 10/04, H01M 50/466

(54) **ELECTRODE ASSEMBLY WHEREIN SEPARATOR IS FOLDED**

(30) Priority: 26.08.2024 KR 20240114303
(71) Applicant: LG Energy Solution, Ltd., Seoul 07335 (KR)
(72) Inventor: JO, Wonki, Daejeon 34122 (KR)
(74) Representative: Plasseraud IP
(86) International application number: PCT/KR2025/009004
(87) International publication number: WO 2026/049243

(57) **Abstract**

The present invention provides an unfolding diagram of a separator laminated with a first electrode and a second electrode, and a structure of an electrode assembly including the separator. According to the present invention, in the unfolding diagram of the separator, first areas and second areas that are alternately repeated and connected in a chain are defined, and the separator is folded in a manner that the first areas and the second areas are alternately and repeatedly overlapped along the thickness direction.

## Description

### [TECHNICAL FIELD]

This application claims the benefit of priority based on Korean Patent Application No. 10-2024-0114303 filed on August 26, 2024, entire content disclosed in the document of the patent applications is included as a part of this specification.

The present invention relates to a structure of an electrode assembly in which a separator surrounds an electrode and is continuously folded.

### [BACKGROUND ART]

Secondary batteries, which provides ease of application depending on the product group and have electrical characteristics such as high energy density, are widely applied not only to portable devices, but also to electric vehicles (EV) or hybrid electric vehicles (HEV) driven by an electrical driving source, and power storage devices.

These secondary batteries are attracting attention as a new energy source for improving eco-friendliness and energy efficiency, not only because secondary batteries have the primary advantage of being able to dramatically reduce the use of fossil fuels, but also because secondary batteries do not generate any by-products due to energy use.

The types of secondary batteries widely used today include lithium ion batteries, lithium polymer batteries, nickel cadmium batteries, nickel hydrogen batteries and nickel zinc batteries. The operating voltage of these unit secondary batteries, i.e. unit battery cells is approximately 2.5V to 4.2V. Therefore, when a higher output voltage is required, a battery pack is constituted by connecting multiple battery cells in series. In addition, a battery pack is constituted by connecting multiple battery cells in parallel according to the charge and discharge capacity required for the battery pack. Accordingly, the number of battery cells and the electrical connection structure of the battery pack may be selected in various ways according to the required output voltage or charge and discharge capacity.

Meanwhile, known types of unit secondary battery cells include cylindrical, prismatic and pouch-type battery cells. Among these, pouch-type batteries incorporate a stacked electrode assembly in which an anode and cathode are repeatedly stacked with a separator along the thickness direction. Recently, a zigzag stacking method has been widely used to manufacture such stacked electrode assemblies, in which anodes and cathodes are alternately stacked between each layer of a continuously supplied and zigzag-folded separator.

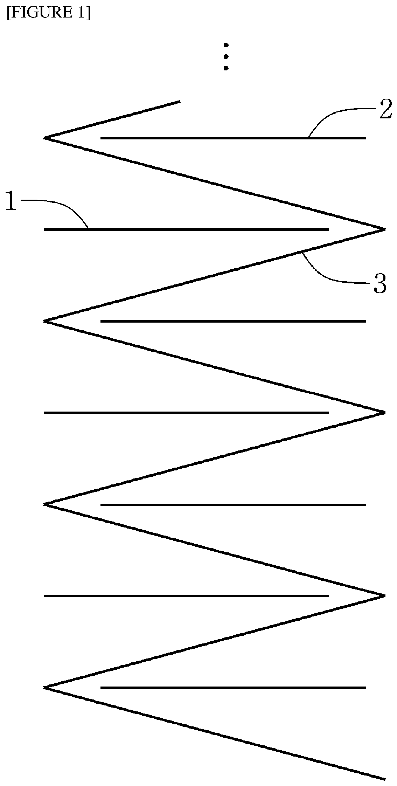

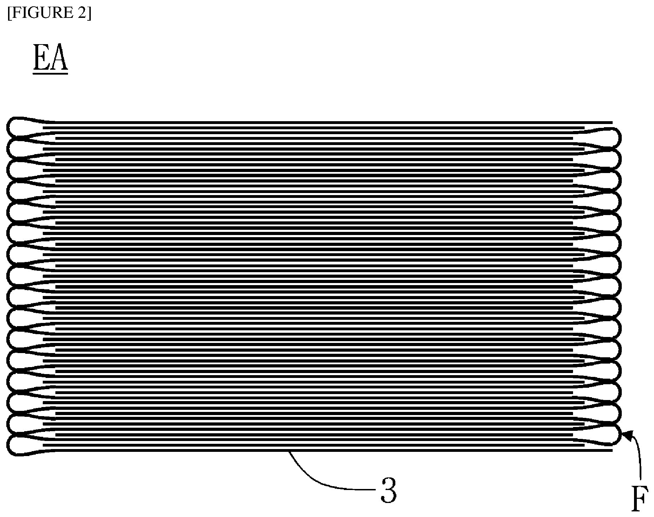

FIG. 1 illustrates a process for manufacturing an electrode assembly using zigzag stacking, and FIG. 2 illustrates an electrode assembly manufactured using zigzag stacking. Referring to FIGS. 1 and 2, the process of manufacturing an electrode assembly EA through zigzag stacking is performed by zigzag-folding a continuously supplied separator 3 and alternately stacking an anode 1 and a cathode 2 between each layer. As a result, a plurality of folded portions F arranged in the thickness direction are formed at the two horizontal ends of the electrode assembly EA.

Since these folded portions F are not formed at the vertical ends of the electrode assembly EA, the electrode assembly EA has a shape in which both ends along the horizontal direction are thicker than the center and are difficult to compress, and thus the overall shape of the electrode assembly EA becomes a shape that is concave downward at the horizontal center. Pouch-type batteries are manufactured by inserting an electrode assembly EA into a pouch and then sealing the pouch. However, the difference in thickness between the center and ends of the electrode assembly EA and the concave center make insertion of the electrode assembly EA difficult. In addition, such uneven cross-section reduces the energy density of the pouch-type battery, which is formed as a rectangular parallelepiped and arranged in multiple pieces. Furthermore, differences in thickness and compressibility along the horizontal direction of the electrode assembly EA make the entire electrode assembly EA vulnerable to bending, torsional and buckling loads.

### [DISCLOSURE]

### [TECHNICAL PROBLEM]

The present invention was devised on the background of the prior art described above, and it is an object of the present invention to provide a structure of an electrode assembly with improved pouch insertability.

It is also an object of the present invention to provide a structure of an electrode assembly capable of improving the energy density of a battery cell in an electrode assembly embedded in a pouch to constitute the battery cell.

It is also an object of the present invention to provide a structure of an electrode assembly with improved structural stability during mounting and insertion, and high resistance to bending loads, torsional loads and buckling loads.

Specifically, it is an object of the present invention to provide a shape and a folding method of a separator continuously folded and stacked together with an electrode to form an electrode assembly and a method of manufacturing an electrode assembly by stacking the separator with electrodes.

The technical problems to be solved by the present invention are not limited to the objects described above, and other objects and advantages of the present invention that are not described may be understood through the following description and will be more clearly understood by the examples of the present invention. Additionally, it is apparent that the objects and advantages of the present invention may be embodied by the means and combinations thereof indicated in the claims.

### [TECHNICAL SOLUTION]

In order to solve above-described problems, the present invention provides a shape of an unfolding diagram of a separator having a first surface and a second surface wherein the separator is repeatedly folded and stacked with a first electrode and a second electrode to form an electrode assembly.

According to the present invention, in the unfolding diagram, first areas and second areas alternately repeated and connected in a chain are defined, and a first direction, a second direction intersecting the first direction, a third direction opposite to the first direction, and a fourth direction opposite the second direction are defined.

Here, each of the first areas is connected to the first direction side or the second direction side of one second area, and each of the second areas is connected to the third direction side or the fourth direction side of one first area.

According to an embodiment of the present invention, the separator may be folded with the first area and the second area alternately and repeatedly overlapped along a thickness direction such that the first surface of the first area and the second surface of the second area face a first thicknesswise direction, and the second surface of the first area and the first surface of the second area face a second thicknesswise direction. In this way, the separator, when folded, has folded portions evenly formed on all four sides. Accordingly, the electrode assembly including the separator has a uniform thickness regardless of direction and may have improved pouch insertability.

The first area and the second area may be substantially congruent parallelograms. Accordingly, when the separator is folded, the first areas and the second areas may be completely overlapped in the thickness direction.

Specifically, According to an embodiment of the present invention, it is preferable that the first areas and the second areas are substantially congruent parallelograms. The first direction and the third direction may be parallel to a vertical direction, and the second direction and the fourth direction may be parallel to a horizontal direction perpendicular to the vertical direction. Accordingly, the completed electrode assembly may be rectangular as a whole in plan view, and the folded portion of the separator may be evenly formed at two horizontal ends and two vertical ends of the electrode assembly.

The unfolding diagram may have a shape extending in an extending direction inclined to the first to fourth directions as a whole. Accordingly, the unfolding diagram may be obtained by cutting a predetermined area from a separator sheet with a constant width extending in the extending direction. Generally, since separator sheet extending with a constant width is manufactured in the form of a roll, manufacturing advantages are great when the unfolding diagram is easily manufactured from such a separator sheet.

The present invention also provides an electrode assembly including: a first electrode; a second electrode; and a separator having a first surface and a second surface wherein the separator is repeatedly folded and stacked with the first electrode and the second electrode.

According to the present invention, first areas and second areas alternately repeated and connected in a chain may be defined in an unfolding diagram of the separator, and a first direction, a second direction intersecting the first direction, a third direction opposite to the first direction, and a fourth direction opposite the second direction may be defined in the unfolding diagram of the separator.

Each of the first areas may be connected to the first direction side or the second direction side of one second area, and each of the second areas may be connected to the third direction side or the fourth direction side of one first area.

Each of the first to fourth directions is defined as a consistent direction in all areas on the unfolding diagram of the separator while defined differently for each area for the folded separator. For example, when the boundary between two areas that are adjacent to each other in the first direction and the third direction on the unfolding diagram is folded, the first direction and the third direction in the folded state may be defined as opposite directions between the two areas. That is, in this case, the first direction in one of the two areas may coincide with the third direction in the other of the two areas, and the third direction in one of the two areas may coincide with the first direction in the other of the two areas.

According to the present invention, the separator is folded with the first area and the second area alternately and repeatedly overlapped along a thickness direction such that the first surface of the first area and the second surface of the second area face a first thicknesswise direction, and the second surface of the first area and the first surface of the second area face a second thicknesswise direction.

In this way, the completely folded separator has folded portions evenly formed on all four sides. Accordingly, the electrode assembly has a uniform thickness regardless of direction and may have improved pouch insertability.

The first electrode is stacked on the first surface of the first area. And the second electrode is stacked on the second surface of the second area. Accordingly, the entirety of the first electrode and the second electrode may be overlapped while being isolated from each other by the separator.

The first area and the second area may be substantially congruent parallelograms. Accordingly, when the separator is folded, the first areas and the second areas may be completely overlapped in the thickness direction.

Specifically, According to an embodiment of the present invention, it is preferable that the first areas and the second areas are substantially congruent parallelograms. The first direction and the third direction may be parallel to a vertical direction, and the second direction and the fourth direction may be parallel to a horizontal direction perpendicular to the vertical direction. Accordingly, the completed electrode assembly may be rectangular as a whole in plan view, and the folded portion of the separator may be evenly formed at two horizontal ends and two vertical ends of the electrode assembly.

The unfolding diagram may have a shape extending in an extending direction inclined to the first to fourth directions as a whole. Accordingly, the unfolding diagram may be obtained by cutting a predetermined area from a separator sheet with a constant width extending in the extending direction. Generally, since separator sheet extending with a constant width is manufactured in the form of a roll, manufacturing advantages are great when the unfolding diagram is easily manufactured from such a separator sheet.

The first electrode may be provided with a first tab protruding in the first direction with respect to the adjacent first area, and the second electrode may be provided with a second tab protruding in the third direction with respect to the adjacent second area. According to the embodiment of the present invention, in the completed electrode assembly, both the first tab and the second tab may protrude from both sides of the electrode assembly in the horizontal direction.

Here, it is preferable that the first tab and the second tab are arranged so as not to overlap each other in the thickness direction such that the first tab and the second tab do not cause a short circuit even without separate insulation.

For example, according to an embodiment of the present invention, the electrode assembly may have a substantially rectangular plane with long and short sides, and the first tab and the second tab may be arranged in long side direction with respect to each other.

More specifically, the first tab may protrude from a position that is offset in the first direction or the third direction with respect to the center of the side in the second direction of the most adjacent first area, and the second tab may protrude from a position that is offset in the third direction or the first direction with respect to the center of the side in the fourth direction of the most adjacent second area.

Accordingly, in the completed electrode assembly, the first tab may protrude from a position offset in one vertical direction at one horizontal end of the electrode assembly and from a position offset in the opposite vertical direction at the other horizontal end, and the second tab may protrude from a position offset in the opposite vertical direction at one horizontal end of the electrode assembly and from a position offset in the one vertical direction at the other horizontal end. Thereafter, by appropriately connecting the first tab and the second tab to each other, the first electrode and the second electrode may be connected in parallel and/or in series.

According to one modified example, the first electrode may be provided with a first tab protruding in the first direction with respect to the adjacent first area, and the second electrode may be provided with a second tab protruding in the third direction with respect to the adjacent second area. Here, the electrode assembly may have a substantially rectangular plane defining horizontal and vertical directions.

According to a modified example of the present invention, in the completed electrode assembly, the first tab may protrude from both of the horizontal sides of the electrode assembly, and the second tab may protrude from both of the vertical sides of the electrode assembly. Thereafter, by appropriately connecting the first tab and the second tab, the first electrode and the second electrode may be connected in parallel and/or in series.

### [ADVANTAGEOUS EFFECTS]

The present invention provides a structure of an electrode assembly with a flatter shape and improved pouch insertability by forming evenly folded portions on all four sides.

The present invention also provides a structure of an electrode assembly capable of minimizing empty space when embedded in a substantially rectangular pouch, thereby improving the energy density of a battery cell.

The present invention also provides a structure of an electrode assembly having a symmetrical and flat shape and structure, thereby improving structural stability during mounting and pouch insertion, and exhibiting high resistance to bending loads, torsional loads and buckling loads.

Specifically, the present invention provides a shape of a separator that is folded continuously in four different directions and stacked with electrodes to form an electrode assembly, a folding method thereof, and a method for manufacturing an electrode assembly by stacking the separator with electrodes, and accordingly, the present invention provides a structure of an electrode assembly manufactured thereby.

In addition, the present invention may have various other effects, and the descriptions thereof will be given in each embodiment, or the description of the effects that may be easily inferred by a person skilled in the art will be omitted.

### [BRIEF DESCRIPTION OF DRAWINGS]

FIG. 1 illustrates a process for manufacturing an electrode assembly using zigzag stacking.
FIG. 2 illustrates an electrode assembly manufactured using zigzag stacking.
FIG. 3 illustrates an unfolding diagram of a separator according to an embodiment of the present invention.
FIG. 4 illustrates a process for cutting a separator sheet to manufacture the unfolding diagram of FIG. 3.
FIGS. 5 to 9 illustrate a process for manufacturing an electrode assembly by stacking electrodes and folding a separator according to an embodiment of the present invention.
FIG. 10 illustrates a completely folded electrode assembly showing illustrating only the separator without the electrodes according to an embodiment of the present invention.
FIG. 11 is a layout diagram illustrating stacking positions of electrodes in the unfolding diagram of FIG. 3 according to an embodiment of the present invention.
FIG. 12 illustrates locations where tabs are formed in the layout diagram of FIG. 11 according to an embodiment of the present invention.
FIG. 13 illustrates a completed electrode assembly according to an embodiment of the present invention.
FIG. 14 illustrates locations where tabs are formed in the layout diagram of FIG. 11 according to a modified example of the present invention.
FIG. 15 illustrates a completed electrode assembly according to a modified example of the present invention.

### [DESCRIPTION OF REFERENCE NUMERALS]

1: first electrode (anode)
10: first tab
2: second electrode (cathode)
20: second tab
3: separator
3a: first surface
3b: second surface
30: separator sheet
31: first area
32: second area
EA: electrode assembly
F: folded portion
UF: unfolding diagram
D1~4: first to fourth directions
D0: extending direction

### [DETAILED DESCRIPTION OF THE PREFERRED EMBODIMENTS]

The above-described objects, features and advantages will be described in detail hereinafter with reference to the accompanying drawings such that those skilled in the art will be able to implement the technical idea of the present invention. In describing the present invention, when it is determined that a detailed description of prior art related to the present invention unnecessarily obscures the gist of the present invention, the detailed description thereof will be omitted. Hereinafter, preferred embodiments according to the present invention will be described in detail with reference to the accompanying drawings. In the drawings, identical reference numerals are used for indicating identical or similar components.

While "first", "second", etc. are used to describe various elements, these elements are of course not limited by these terms. These terms are only used to distinguish one element from another, and unless specifically stated otherwise, a first element may also be a second element.

Throughout the specification, unless stated otherwise, each element may be singular or plural.

Hereinafter, "arranging an element at upper portion (or lower portion) of an element" or "arranging an element at top (or bottom) of an element" refers to not only "arranging an element to be in contact with upper surface (or lower surface)" but also to "arranging an element above upper surface (or lower surface) with another element interposed therebetween."

Additionally, when an element is described as being "connected to," "coupled to," or "in contact with" another element, it should be understood that the element may be "directly connected to," "directly coupled to," or "directly in contact with" another element, or the element may be "connected to," "coupled to," or "in contact with" another element with yet another element interposed therebetween or via yet another element.

The expressions in singular form used herein include expressions in plural form unless the context explicitly dictates otherwise. Terms such as "consists of" or "comprises" used herein should not be construed as necessarily including all of the elements or steps described in the specification, and should be construed as not including some of the elements or steps, or including additional elements or steps.

Throughout the specification, "A and/or B" refers to A, B or A and B unless specifically stated otherwise, and "C to D" refers to from equal to or higher than C to equal to or lower D unless specifically stated otherwise.

Hereinafter, preferred embodiments of the present invention will be described with reference to the accompanying drawings.

An electrode assembly EA according to an embodiment of the present invention is constituted by alternately and repeatedly stacking a first electrode 1 and a second electrode 2 between each layer of a separator 3 continuously folded to form multiple layers overlapping in the thickness direction.

Here, the first electrode 1 and the second electrode 2 may be either one or the other of an anode and a cathode, respectively.

Here, the separator 3 may be obtained from a single unfolding diagram UF including a plurality of areas divided by a single border and a plurality of folding lines, folded along the folding lines. Here, while one electrode assembly EA may include one separator 3, a plurality of folded separators 3 from each unfolding diagrams UF may constitute one electrode assembly EA in some cases.

Hereinafter, the shape of the unfolding diagram UF of the separator 3 will be described in detail, and thereafter, the structure of the electrode assembly EA, which is manufactured by folding the separator 3 having the above-described unfolding diagram UF and stacking it together with the first electrode 1 and the second electrode 2, will be described in detail.

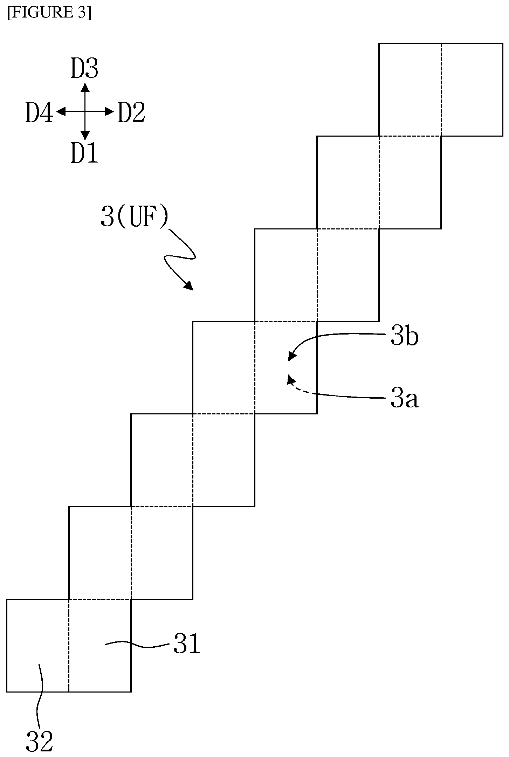

FIG. 3 illustrates an unfolding diagram of a separator according to an embodiment of the present invention. Referring to FIG. 3, the separator 3 has a first surface 3a and a second surface 3b facing each other in the thickness direction. Each of the first surface 3a and the second surface 3b is defined as a single continuous surface not only when the separator 3 is unfolded but also when the separator 3 is folded.

According to the present invention, in the unfolding diagram UF, a first direction D1, a second direction D2 intersecting the first direction D1, a third direction D3 opposite to the first direction D1, and a fourth direction D4 opposite the second direction D2 are defined.

Here, in the unfolding diagram UF, first areas 31 and second areas 32 alternately repeated and connected in a chain are defined. That is, the separator 3 includes at least one first area 31 and one second area 32 different from each other within the entire area thereof. The first area 31 and the second area 32 being alternately repeated and connected in a chain may refer to the first area 31 and the second area 32 being alternately connected along a predetermined path (zigzag according to the embodiment of the present invention) to form a chain.

According to an embodiment of the present invention, each of the first areas 31 is connected to the first direction D1 side or the second direction D2 side of one second area, and each of the second areas 32 is connected to the third direction D3 side or the fourth direction D4 side of one first area.

More specifically, the first area 31 and the second area 32 may be arranged as in the following four cases:
1. When the first area 31 constitutes the starting end of the chain and the second area 32 constitutes the finishing end of the chain:
   In this case, each of the first areas 31 is connected to the first direction D1 side of one second area 32, and each of the second areas 32 is connected to the third direction D3 side of one first area 31. Here, each of the first areas 31, excluding the first area 31 forming the starting end of the chain, is simultaneously connected to the second direction D2 side of one second area 32, and each of the second areas 32, excluding the second area 32 forming the finishing end of the chain, is simultaneously connected to the fourth direction D4 side of one first area 31.
2. When the second area 32 constitutes the starting end of the chain and the first area 31 constitutes the finishing end of the chain (in the case of the embodiment of the present invention):
   In this case, each of the first areas 31 is connected to the second direction D2 side of one second area 32, and each of the second areas 32 is connected to the fourth direction D4 side of one first area 31. Here, each of the first areas 31, excluding the first area 31 constituting the finishing end of the chain, is simultaneously connected to the first direction D1 side of one second area 32, and each of the second areas 32, excluding the second area 32 constituting the starting end of the chain, is simultaneously connected to the third direction D3 side of one first area 31.
3. When the first area 31 constitutes the starting and finishing ends of the chain:
   In this case, each of the second areas 32 is connected to the third direction D3 side of one first area 31 and simultaneously to the fourth direction D4 side of the other first area 31. Here, the first area 31 constituting the starting end of the chain is connected to the first direction D1 side of one second area 32, and the first area 31 constituting the finishing end of the chain is connected to the second direction D2 side of the other second area 32. Each of the first areas 31 excluding these is connected to the first direction D1 side of one second area 32 and simultaneously to the second direction D2 side of the other second area 32.
4. When the second area 32 constitutes the starting and finishing ends of the chain:
   In this case, each of the first areas 31 is connected to the first direction D1 side of one second area 32 and simultaneously to the second direction D2 side of the other second area 32. Here, the second area 32 constituting the starting end of the chain is connected to the fourth direction D4 side of one first area 31, and the second area 32 constituting the finishing end of the chain is connected to the third direction D3 side of the other first area 31. Each of the second areas 32 excluding these is connected to the third direction D3 side of one first area 31 and simultaneously to the fourth direction D4 side of the other first area 31.

Each of the first to fourth directions D1, D2, D3 and D4 are defined as a consistent direction in all areas 31 and 32 on the unfolding diagram UF of the separator 3 while defined differently for each of the areas 31 and 32 for the folded separator 3. For example, when the boundary between two areas that are adjacent to each other in the first direction D1 and the third direction D3 on the unfolding diagram UF is folded, the first direction D1 and the third direction D3 in the folded state may be defined as opposite directions between the two areas. That is, in this case, the first direction D1 in one of the two areas may coincide with the third direction D3 in the other of the two areas, and the third direction D3 in one of the two areas may coincide with the first direction D1 in the other of the two areas.

The first area 31 and the second area 32 may be substantially congruent parallelograms. Accordingly, when the separator 3 is folded, the first areas 31 and the second areas 32 may be completely overlapped in the thickness direction.

Specifically, according to an embodiment of the present invention, it is preferable that the first area 31 and the second area 32 are substantially congruent rectangles. Here, the first direction D1 and the third direction D3 may be parallel to the vertical direction, and the second direction D2 and the fourth direction D4 may be parallel to the horizontal direction perpendicular to the vertical direction. Accordingly, the completed electrode assembly EA may has an overall rectangular shape in plan view, and the folded portion of the separator 3 may be evenly formed at the two horizontal ends and the two vertical ends of the electrode assembly EA.

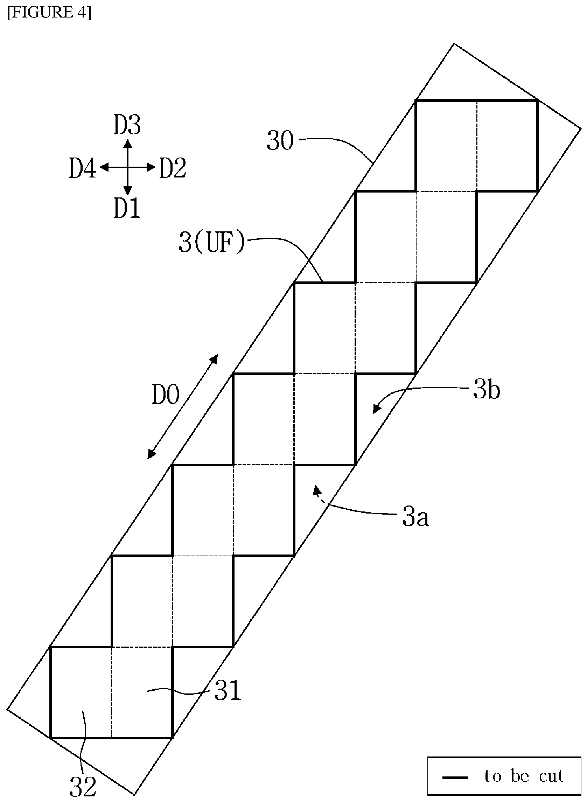

FIG. 4 illustrates a process for cutting a separator sheet to manufacture the unfolding diagram of FIG. 3. Referring to FIG. 4, the unfolding diagram UF, as a whole, may have a shape extending in an extending direction D0 that is inclined with respect to the first to fourth directions D1, D2, D3, and D4. Accordingly, the unfolding diagram UF may be obtained by cutting a predetermined area from a separator sheet 30 with a constant width extending in the extending direction D0. Generally, since the separator sheet 30 extending with a constant width is manufactured in the form of a roll, manufacturing advantages are great when the unfolding diagram UF is easily manufactured from such a separator sheet 30.

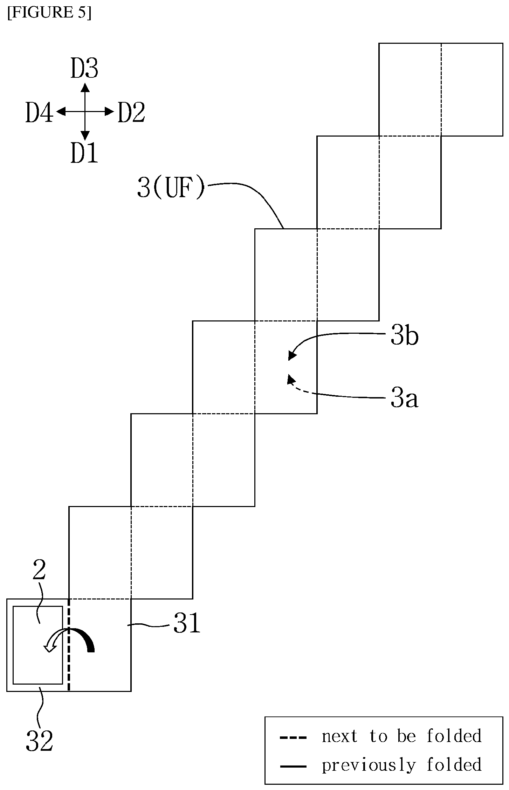

FIGS. 5 to 9 illustrate a process for manufacturing an electrode assembly by stacking electrodes and folding a separator according to an embodiment of the present invention. Referring to FIGS. 5 to 9, the separator 3 is folded with the first area 31 and the second area 32 alternately and repeatedly overlapped along the thickness direction such that the first surface 3a of the first area 31 and the second surface 3b of the second area 32 face a first thicknesswise direction, and the second surface 3b of the first area 31 and the first surface 3a of the second area 32 face a second thicknesswise direction.

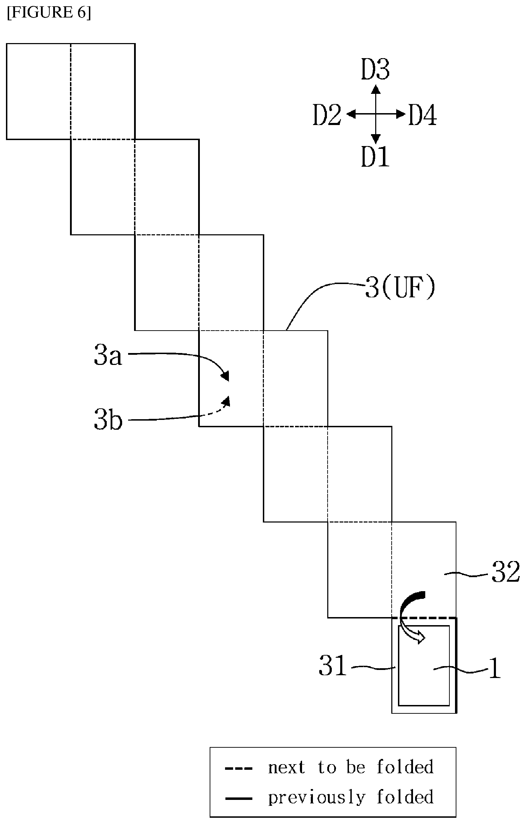

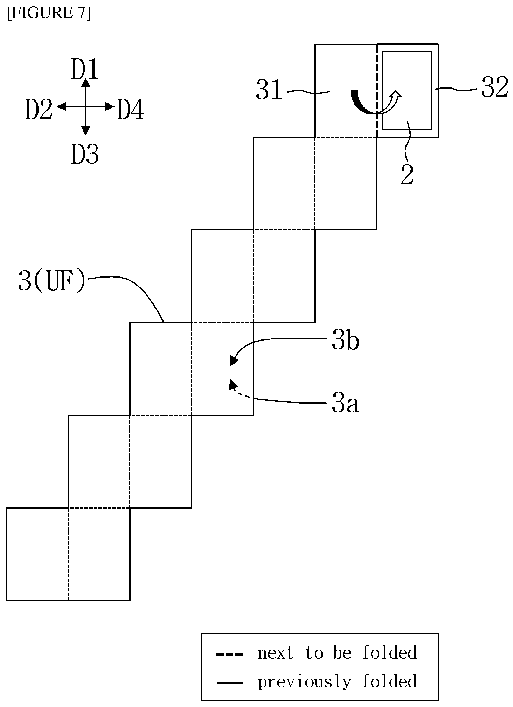

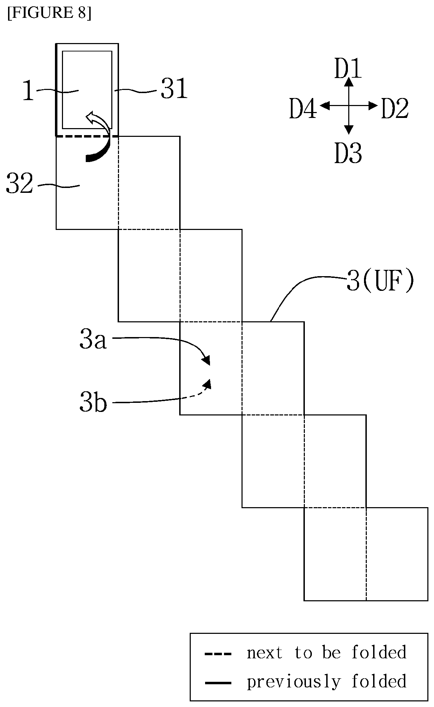

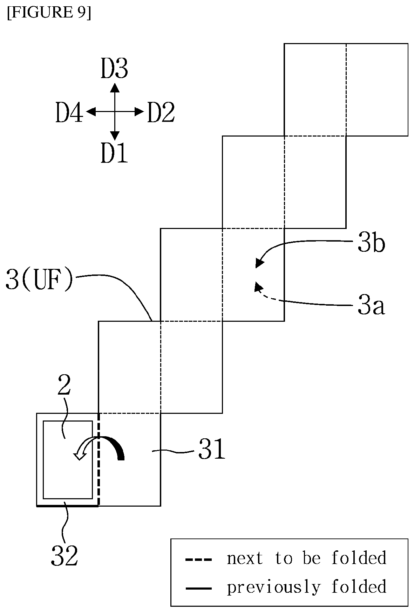

More specifically, the manufacturing process of the electrode assembly according to the embodiment of the present invention may be performed by sequentially repeating the folding processes of different first to fourth steps sequentially corresponding to FIGS. 5 to 8, respectively. In the manufacturing process, the first to fourth steps only need to be repeated sequentially, and any step may be the first step or the last step:
The first step (FIGS. 5 and 9): After the second electrode 2 is stacked on the second surface 3b of the second area 32 located at one end of the unfolding diagram UF of the separator 3, the boundary between the second area 32 where the second electrode 2 is stacked and the remaining portion of the separator 3 is folded. Here, a folded portion is formed on the second direction D2 side of the second area 32 where the second electrode 2 is stacked. By performing the first step, the separator 3 is in a state shown in FIG. 6.
The second step (FIG. 6): After stacking the first electrode 1 on the first surface 3a of the first area 31 located at one end on the unfolding diagram UF of the separator 3, the boundary between the first area 31 where the first electrode 1 is stacked and the remaining portion of the separator 3 is folded. Here, a folded portion is formed on the third direction D3 side of the first area 31 where the first electrode 1 is stacked. By performing the second step, the separator 3 is in a state shown in FIG. 7.
The third step (FIG. 7): After stacking the second electrode 2 on the second surface 3b of the second area 32 located at one end on the unfolding diagram UF of the separator 3, the boundary between the second area 32 where the second electrode 2 is stacked and the remaining portion of the separator 3 is folded. Here, a folded portion is formed on the second direction D2 side of the second area 32 where the second electrode 2 is stacked. By performing the third step, the separator 3 is in a state shown in FIG. 8.
The fourth step (FIG. 8): After stacking the first electrode 1 on the first surface 3a of the first area 31 located at one end of the unfolding diagram UF of the separator 3, the boundary between the first area 31 where the first electrode 1 is stacked and the remaining portion of the separator 3 is folded. Here, a folded portion is formed on the third direction D3 side of the first area 31 where the first electrode 1 is stacked. By performing the fourth step, the separator 3 is in a state shown in FIG. 9.

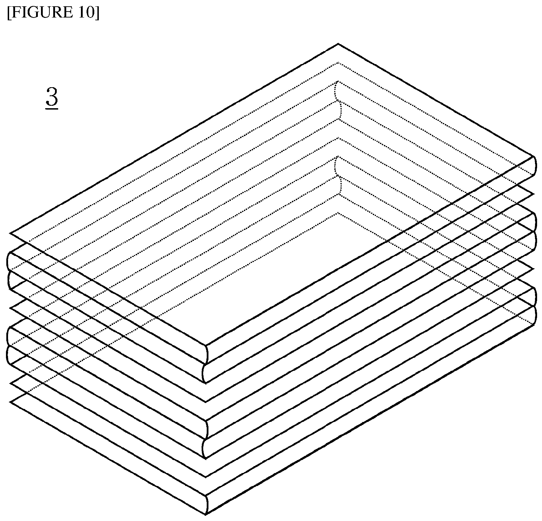

FIG. 10 illustrates a completely folded electrode assembly showing illustrating only the separator without the electrodes according to an embodiment of the present invention. Referring to FIG. 10, the completely folded separator 3 has folded portions evenly formed on all four sides. Accordingly, the electrode assembly EA has a uniform thickness regardless of direction and may have improved pouch insertability.

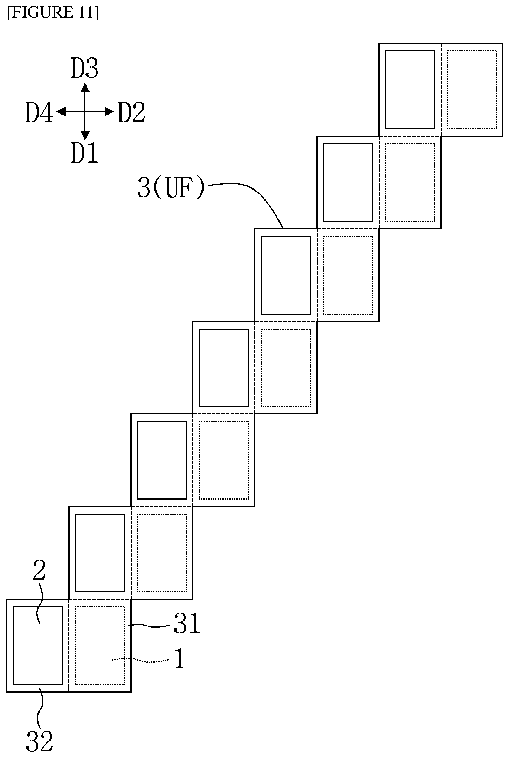

FIG. 11 is a layout diagram illustrating stacking positions of electrodes in the development diagram of FIG. 3 according to an embodiment of the present invention. That is, FIG. 11 illustrates the electrode assembly EA manufactured by sequentially repeating the steps of FIGS. 5 to 9, which is then unfolded again with the first electrode 1 and the second electrode 2 stacked. Referring to FIG. 11, it may be seen that the first electrode 1 is stacked on the first surface 3a of the first area 31, and the second electrode 2 is stacked on the second surface 3b of the second area 32. Here, since the first area 31 and the second area 32 are not connected to the same type of area, all of the first electrodes 1 and the second electrodes 2 may be overlapped while being isolated from each other by the separator 3.

Here, when the first area 31 and the second area 32 are substantially congruent parallelograms, the first areas 31 and the second areas 32 may be completely overlapped in the thickness direction with when the separator 3 folded.

According to an embodiment of the present invention, it is preferable that the first area 31 and the second area 32 are substantially congruent rectangles. Here, since the first direction D1 and the third direction D3 are parallel to the vertical direction, and the second direction D2 and the fourth direction D4 are parallel to the horizontal direction perpendicular to the vertical direction, the completed electrode assembly EA may have an rectangular shape as a whole in plan view, and the folded portion of the separator 3 may be evenly formed on the two horizontal ends and the two vertical ends of the electrode assembly EA.

The electrode assembly EA according to an embodiment of the present invention has a tab for electrically connecting the first electrode 1 and the second electrode 2 to an external terminal.

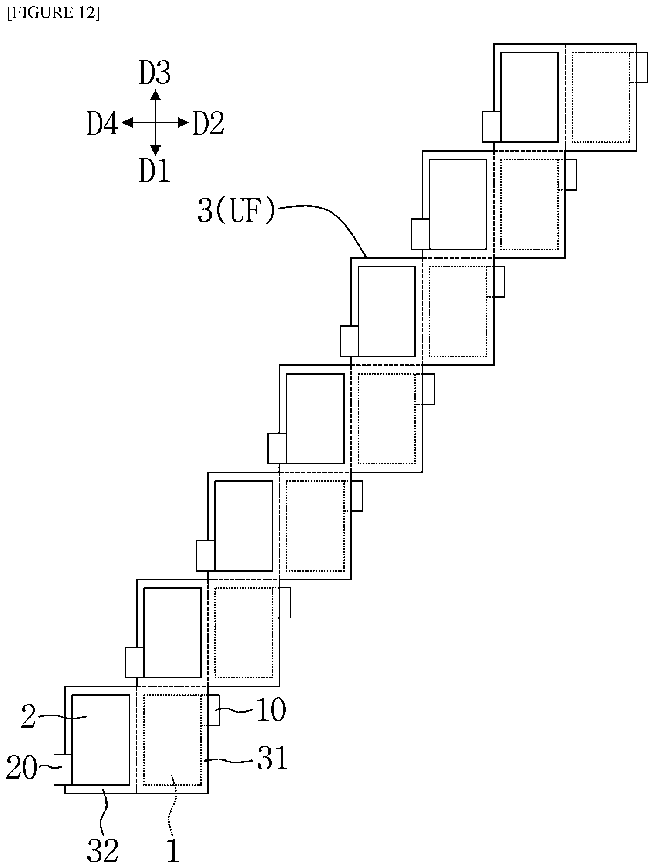

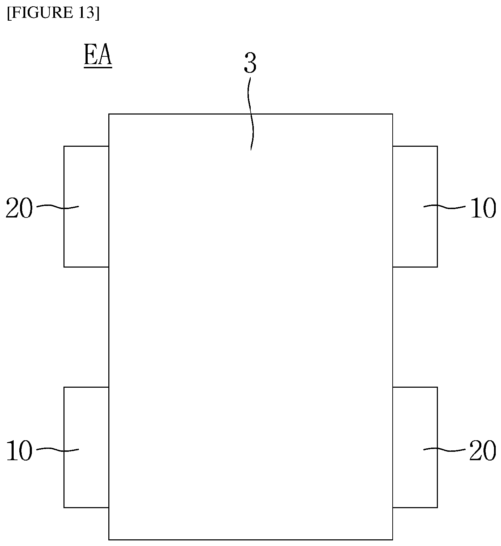

FIG. 12 illustrates locations where tabs are formed in the layout diagram of FIG. 11 according to an embodiment of the present invention, and FIG. 13 illustrates a completed electrode assembly according to an embodiment of the present invention. Referring to FIGS. 12 and 13, the first electrode 1 may be provided with a first tab 10 protruding in the second direction D2 with respect to the adjacent first area 31, and the second electrode 2 may be provided with a second tab 20 protruding in the fourth direction D4 with respect to the adjacent second area 32. According to the embodiment of the present invention, in the completed electrode assembly EA, both the first tab 10 and the second tab 20 may protrude from both sides of the electrode assembly EA in the horizontal direction.

Here, it is preferable that the first tab 10 and the second tab 20 are arranged so as not to overlap each other in the thickness direction such that the first tab 10 and the second tab 20 do not cause a short circuit even without separate insulation.

For example, according to an embodiment of the present invention, the electrode assembly EA may have a substantially rectangular plane with long and short sides, and the first tab 10 and the second tab 20 may be arranged in long side direction with respect to each other.

More specifically, the first tab 10 may protrude from a position that is offset in the first direction D1 or the third direction D3 with respect to the center of the side in the second direction D2 of the most adjacent first area 31, and the second tab 20 may protrude from a position that is offset in the third direction D3 or the first direction D1 with respect to the center of the side in the fourth direction D4 of the most adjacent second area 31.

Accordingly, in the completed electrode assembly EA, the first tab 10 may protrude from a position offset in one vertical direction at one horizontal end of the electrode assembly EA and from a position offset in the opposite vertical direction at the other horizontal end, and the second tab 20 may protrude from a position offset in the opposite vertical direction at one horizontal end of the electrode assembly EA and from a position offset in the one vertical direction at the other horizontal end. Thereafter, by appropriately connecting the first tab 10 and the second tab 20 to each other, the first electrode 1 and the second electrode 2 may be connected in parallel and/or in series.

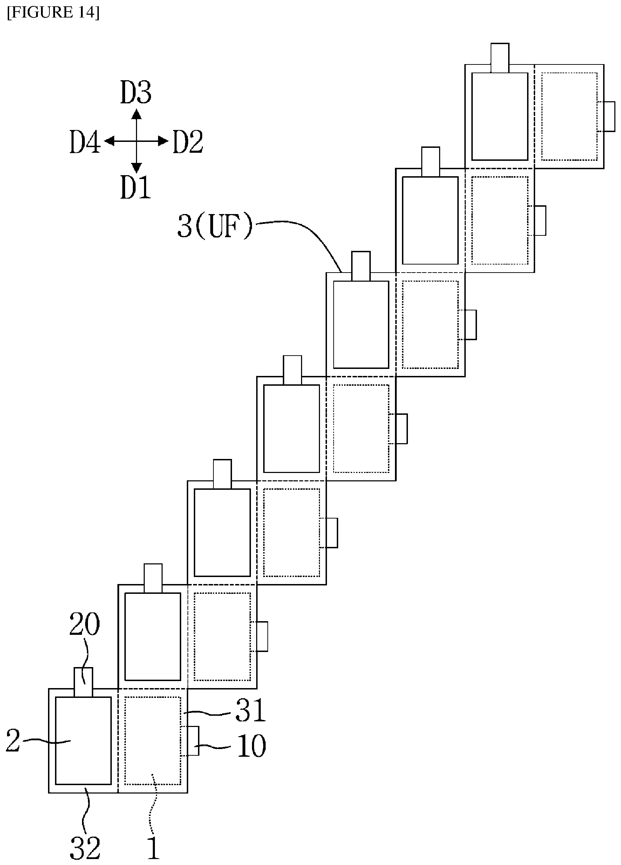

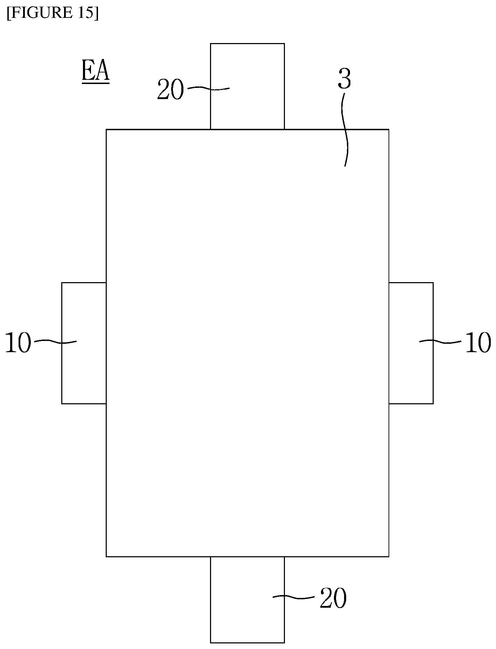

FIG. 14 illustrates locations where tabs are formed in the layout diagram of FIG. 11 according to a modified example of the present invention, and FIG. 15 illustrates a completed electrode assembly according to a modified example of the present invention. Referring to FIGS. 14 and 15, the first electrode 1 may be provided with a first tab 10 protruding in the first direction D1 with respect to the adjacent first area 31, and the second electrode 2 may be provided with a second tab 20 protruding in the third direction D3 with respect to the adjacent second area 32. The electrode assembly EA may have a substantially rectangular plane defining horizontal and vertical directions.

According to a modified example of the present invention, in the completed electrode assembly EA, the first tab 10 may protrude from both of the horizontal sides of the electrode assembly EA, and the second tab 20 may protrude from both of the vertical sides of the electrode assembly EA. Thereafter, by appropriately connecting the first tab 10 and the second tab 20, the first electrode 1 and the second electrode 2 may be connected in parallel and/or in series.

It should be understood that the described embodiments are illustrative in all respects and not restrictive, and the scope of the present invention will be indicated by the following claims rather than the described detailed description. And the meaning and scope of the claims to be described later, as well as all changes and modifications derived from the equivalent concept should be interpreted as being included in the scope of the present invention.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

## Claims

1. An unfolding diagram of a separator having a first surface and a second surface, the separator repeatedly folded and stacked with a first electrode and a second electrode to form an electrode assembly, wherein:
first areas and second areas alternately repeated and connected in a chain are defined;
a first direction, a second direction intersecting the first direction, a third direction opposite to the first direction, and a fourth direction opposite the second direction are defined;
each of the first areas is connected to the first direction side or the second direction side of one second area; and
each of the second areas is connected to the third direction side or the fourth direction side of one first area.

2. The unfolding diagram of claim 1, wherein the first direction and the third direction are parallel to a vertical direction, and
the second direction and the fourth direction are parallel to a horizontal direction perpendicular to the vertical direction.

3. The unfolding diagram of claim 1, wherein the first areas and the second areas are substantially congruent parallelograms.

4. The unfolding diagram of claim 2, wherein the first areas and the second areas are substantially congruent rectangles.

5. The unfolding diagram of claim 1, wherein the unfolding diagram has a shape extending in an extending direction inclined to the first to fourth directions as a whole.

6. An electrode assembly comprising:
a first electrode;
a second electrode; and
a separator having a first surface and a second surface, the separator repeatedly folded and stacked with the first electrode and the second electrode,
wherein first areas and second areas alternately repeated and connected in a chain are defined in an unfolding diagram of the separator,
a first direction, a second direction intersecting the first direction, a third direction opposite to the first direction, and a fourth direction opposite the second direction are defined in the unfolding diagram of the separator,
each of the first areas is connected to the first direction side or the second direction side of one second area,
each of the second areas is connected to the third direction side or the fourth direction side of one first area,
the separator is folded with the first area and the second area alternately and repeatedly overlapped along a thickness direction such that the first surface of the first area and the second surface of the second area face a first thicknesswise direction, and the second surface of the first area and the first surface of the second area face a second thicknesswise direction,
the first electrode is stacked on the first surface of the first area. and
the second electrode is stacked on the second surface of the second area.

7. The electrode assembly of claim 6, wherein the first direction and the third direction are parallel to a vertical direction, and
the second direction and the fourth direction are parallel to a horizontal direction perpendicular to the vertical direction.

8. The electrode assembly of claim 6, wherein the first areas and the second areas are substantially congruent parallelograms.

9. The electrode assembly of claim 8, wherein the first areas and the second areas are substantially congruent parallelograms.

10. The electrode assembly of claim 6, wherein the unfolding diagram has a shape extending in an extending direction inclined to the first to fourth directions as a whole.

11. The electrode assembly of claim 6, wherein the first electrode is provided with a first tab protruding in the second direction with respect to the adjacent first area, and
the second electrode is provided with a second tab protruding in the fourth direction with respect to the adjacent second area.

12. The electrode assembly of claim 11, wherein the first tab and the second tab are arranged so as not to overlap each other in the thickness direction.

13. The electrode assembly of claim 12, wherein the electrode assembly has a substantially rectangular plane with long and short sides, and
the first tab and the second tab are arranged in long side direction with respect to each other.

14. The electrode assembly of claim 6, wherein the first electrode is provided with a first tab protruding in the first direction with respect to the adjacent first area, and
the second electrode is provided with a second tab protruding in the third direction with respect to the adjacent second area.

15. The electrode assembly of claim 14, wherein the electrode assembly has a substantially rectangular plane defining a horizontal direction and a vertical direction,
the first tab protrudes in both sides of the horizontal direction, and
the second tab protrudes in both sides of the vertical direction.
